Europäisches Patentamt

European Patent Office

Office européen des brevets

(19)

(11) **EP 0 699 307 B1**

(12) **EUROPÄISCHE PATENTSCHRIFT**

(45) Veröffentlichungstag und Bekanntmachung des Hinweises auf die Patenterteilung:
**12.08.1998 Patentblatt 1998/33**

(51) Int Cl.$^6$: **G01S 15/10**, G01S 7/52, G01N 29/22

(21) Anmeldenummer: **94917580.6**

(22) Anmeldetag: **06.05.1994**

(86) Internationale Anmeldenummer:
**PCT/EP94/01437**

(87) Internationale Veröffentlichungsnummer:
**WO 94/27165 (24.11.1994 Gazette 1994/26)**

(54) **VERFAHREN UND VORRICHTUNG ZUR ZERSTÖRUNGSFREIEN PRÜFUNG VON GEGENSTÄNDEN MIT ULTRASCHALL**

METHOD AND DEVICE FOR THE NON-DESTRUCTIVE TESTING OF OBJECTS USING ULTRASONICS

PROCEDE ET DISPOSITIF POUR L'ESSAI NON DESTRUCTIF D'OBJETS AU MOYEN D'ULTRASONS

(84) Benannte Vertragsstaaten:
**AT BE CH DE DK ES FR GB IT LI LU NL SE**

(30) Priorität: **13.05.1993 DE 4315794**

(43) Veröffentlichungstag der Anmeldung:
**06.03.1996 Patentblatt 1996/10**

(73) Patentinhaber: **NUKEM GmbH**
**D-63755 Alzenau (DE)**

(72) Erfinder:
• **KOCH, Roman**
**D-63768 Hösbach (DE)**
• **KREUTTER, Thomas**
**D-63773 Goldbach (DE)**

(74) Vertreter:
**Stoffregen, Hans-Herbert, Dr. Dipl.-Phys.**
**Patentanwalt**
**Postfach 21 44**
**63411 Hanau (DE)**

(56) Entgegenhaltungen:
**EP-A- 0 471 223          US-A- 4 460 890**

• **SENSORS AND ACTUATORS A, Bd.A32, Nr.1/3, April 1992, LAUSANNE CH Seiten 550 - 554, XP287373 ROS ET AL. 'Digital techniques improve range measurements with ultrasound sensor'**

**Beschreibung**

Die Erfindung bezieht sich auf ein Verfahren und eine Vorrichtung zur zerstörungsfreien Prüfung von Gegenständen mit Ultraschall, wobei mit einem Ultraschallprüfkopf Ultraschallimpulse in den jeweiligen Gegenstand eingeleitet werden, und wobei aus dem Gegenstand aufgrund der jeweils eingeleiteten Ultraschallimpulse Ultraschallwellen austreten, die mit einem Ultraschallprüfkopf erfaßt und in elektrische Signale eines Signalzuges umgewandelt werden.

In der medizinischen Technik ist ein Ultraschalluntersuchungsverfahren für Diagnose-zwecke bekannt, bei dem Ultraschallschwingungen in einen zu untersuchenden Körper eingeleitet werden, der Ultraschallechos erzeugt, die von einem Ultraschallwandler in elektrische Signale umgesetzt werden. Mit mechanischen oder elektronischen Mitteln wird die Abstrahlrichtung der Ultraschallschwingungen nach und nach in gleichen Winkelschritten geändert. Durch die beiden äußeren Abstrahlrichtungen wird ein Untersuchungsbereich im Körper begrenzt. Die längs der durch die Abstrahlrichtungen vorgegebenen Bahnen reflektierten Ultraschallechos werden in eine Folge von Meßwerten umgesetzt, die die Reflexionseigenschaften des Untersuchungsbereichs an verschiedenen Meßpunkten darstellen, die Bildpunkten eines Ultraschallbildes zugeordnet werden, das auf einem Bildschirm angezeigt wird. Für jeden Bildpunkt des Ultraschallbildes wird ein Bildwert durch Interpolation der Meßwerte derjenigen Meßpunkte berechnet, die dem Bildpunkt durch die geometrische Zuordnung zwischen dem Untersuchungsbereich und dem Ultraschallbild benachbart sind (DE 36 40 882 A1).

In der medizinischen Technik ist auch ein Verfahren zur Laufzeitbestimmung von Ultraschallimpulsen bekannt, die einen Untersuchungsbereich durchsetzen und von einem Ultraschallwandler in ein elektrisches Meßsignal umgesetzt werden. Es wird nach dem Aussenden des Ultraschallimpulses der Zeitraum gemessen, der verstreicht, bis das Meßsignal eine vorgegebene Schwelle erreicht hat. Das Meßsignal wird verstärkt und einem Analog-Digital-Umsetzer zugeführt, der mit einer vorgegebenen Abtastrate arbeitet. Die Abtastwerte des Analog-Digital-Umsetzers werden gespeichert. Ein durch eine Folge von Abtastwerten gebildeter Ausschnitt des Meßsignals wird mit einem gleich langen Ausschnitt eines Referenzsignals das als Folge von Referenzwerten gespeichert ist, verglichen. Der Ausschnitt des Referenzsignals, und gegebenenfalls des Meßsignals werden solange um jeweils eine Stützstelle verschoben, bis die verschobenen Abschnitte, die erneut miteinander verglichen werden, am besten übereinstimmen. Die Laufzeit wird mit einem digitalen Prozessor, der Steuerfunktion ausführen kann, durch Korrektur des ermittelten Zeitraumes bestimmt. Die Folge von Referenzwerten, die den Abtastwerten des Ausschnittes möglichst genau proportional ist, wird mit einer Funktion gefunden, die ein Maß für die Abweichung des mit einem Faktor skalierten Ausschnitts des Meßsignals von einem entsprechend langen Abschnitt des Referenzsignals ist (DE-A-32 42 284).

Bekannt ist ferner eine Ultraschall-Abbildungsvorrichtung für die medizinische Diagnose-technik mit einem Ultraschallwandler, der einen Ultraschallstrahl in einem Körper einleitet, um eine Sektorabtastung durchzuführen. Der Ultraschallwandler setzt Ultraschallechowellen in Echosignale um, die in Intervallen abgestastet werden, die kürzer als die Teilung von Pixeln bzw. Bildelementen ist. Die entlang jeder Abtastlinie abgetasteten Meßwerte werden als Pixeldaten gespeichert. Die Daten, die an denjenigen Punken von zwei benachbarten Abtastlinien angeordnet sind, die gleich weit von einem Strahlemissionspunkt beabstandet sind, werden zur Gewinnung von Interpolationsdaten herangezogen (DE-A-36 32 813).

Bei einem bekannten Verfahren zur Bestimmung der Amplitude und der Amplitudenlage des Maximums eines Korrelationssignals werden einem Korrelator ein digitalisiertes Bildsignal und ein digitalisiertes Referenzbild zugeführt. Der Korrelator erzeugt das Korrelationssignal, das an einen Speicher mit Maximumdetektor abgegeben wird, der die Amplitude und die Amplitudenlage errechnet. Die errechneten Werte werden anschließend interpoliert, um dem echten Maximum stärker angenäherte Werte zu bestimmen (DE-A-38 12 195).

Schließlich ist es bei der Meßsignalverarbeitung mit hochauflösenden Analog/Digital-Umsetzern bekannt, die analogen Signale mit niedriger Grenzfrequenz zu filtern und die Analog-Digital-Wandlung mit hoher Auflösung durchzuführen (Zeitschrift: Technisches Messen tm, 52. Jg., Heft 11, 1985, S. 404-410).

Weiterhin ist es bekannt, diskrete Werte einer Funktion durch Polynome zu interpolieren (Buch: A. Duschek: "Vorlesungen über höhere Mathematik", 4. Auflage 1965, S 297-301, Bd. 1).

Wichtige Kenngrößen für ein Ultraschallgerät zur zerstörungsfreien Werkstoffprüfung in automatisierten Prüfanlagen sind die Geschwindigkeit und die Genauigkeit, mit der Rißfehlersignale und Wanddickensignale, die man aus mit dem Ultraschall-Impuls-Echo-Verfahren erzeugten Fehlerechos bzw. aus einer Rückwandechofolge erhält, erfaßt werden können.

Demzufolge ist die Qualität eines Ultraschallgerätes gegeben durch die Amplituden- und Laufzeitauflösung, die bei einer möglichst hohen Impulsfolgefrequenz erzielt wird. Unter Amplitudenauflösung ist die Genauigkeit der Feststellung des Amplitudenextremums (positives Maximum oder negatives Minimum) bzw. der positiven oder negativen maximalen Impulsspitze zu verstehen. Die Laufzeit ist die Zeit, die zwischen dem Eintreten der Ultraschallimpulse in den Gegenstand und dem Empfang der aus dem Gegenstand austretenden Ultraschallwellen vergeht.

In einem analogen Ultraschallgerät sind zur Auswertung der von einem Prüfkopf bzw. Ultraschallsensor empfangenen Signale nach der Verstärkung einzelne Zeitbereiche (Blenden) auswählbar. Für jede Blende ist zur Amplitudenbestimmung ein Spitzenwertspeicher erforderlich, mit dem das Signalextremum innerhalb der Blende analog erfaßt wird. Bei den üblichen Systemen wird das so gewonnene Signal zur weiteren Verarbeitung in einem Rechner dann digitalisiert.

Zur Laufzeitmessung ist ein zusätzliches Modul erforderlich. Mit der Signalspitze bzw. der Flanke bei Schwellüberschreitung innerhalb einer Blende wird ein digitaler Zähler gestartet, der mit dem Ereignis innerhalb einer zweiten Blende gestoppt wird. Zur Erzielung der erforderlichen Genauigkeit sind hier hochfrequente und damit aufwendige digitale Zähler erforderlich. Zur Verbesserung der Auflösung wird oftmals eine zusätzliche analoge Zeitmessung über ein Sägezahnsignal integriert. Der beim Stoppereignis erreichte Amplitudenwert des Sägezahns wird ebenfalls digitalisiert und über eine Kalibrierung in eine Laufzeit umgerechnet.

In einem digitalen Ultraschallgerät wird der komplette von einem Ultraschall-Prüfkopf bzw. Ultraschallsensor empfangene Signalzug unmittelbar nach der Verstärkung digitalisiert. Die Bestimmung von Amplitude und Laufzeit erfolgt danach aus den digitalen Daten.

Die Genauigkeit, mit der hochfrequente impulsförmige Signale bei einer digitalen Meßwertaufnahme bestimmt werden können, wird durch die Leistungsdaten des eingesetzten Analog-Digital-Converters (ADC) begrenzt. Die erzielbare Genauigkeit bei der Amplitudenbestimmung der maximalen Impulsspitze wird neben der Digitalisierungsauflösung (Bitzahl) überwiegend durch die Abtastrate (Samplingfrequenz) des ADC's bestimmt. Die zeitliche Position des Impulsmaximums, deren genaue Kenntnis zur Bestimmung von Laufzeiten erforderlich ist, wird allein durch die verfügbare Abtastrate bestimmt.

Je kleiner das Verhältnis von Samplingfrequenz zu Signalfrequenz wird, desto schlechter wird hierbei die Auflösung der Amplituden- und Laufzeitbestimmung. Dies bedeutet, daß zur Bestimmung von kurzen breitbandigen und damit hochfrequenten Impulsen sehr hohe Abtastraten erforderlich sind.

Üblicherweise werden in der Technik zur Erzielung der erforderlichen Genauigkeit Verfahren (interleaved oder random sampling) angewandt, bei denen das gleiche Ereignis mehrmals hintereinander auftreten muß und dann zu unterschiedlichen Zeitpunkten digitalisiert wird. Zur Erzielung der erforderlichen Genauigkeit bei einmalig auftretenden Ereignissen werden jedoch Anforderungen an den einzusetzenden ADC (hohe Digitalisierung und hohe Samplingrate) und die nachfolgenden Speicherbausteine (hohe Geschwindigkeit und große Tiefe) gestellt, die zur Zeit unter preislichen Gesichtspunkten aufgrund des sehr hohen Aufwandes nicht realisierbar sind.

Werden ein handelsüblicher Analog-Digital-Umsetzer und Standardspeicherbausteine eingesetzt, so ist die Abtastdichte der Signale zur genauen Bestimmung der maximalen Signalamplitude und deren Zeitpunktes nicht ausreichend.

Hier setzt die Erfindung ein. Der Erfindung liegt das Problem zugrunde, ein Verfahren und eine Vorrichtung zur zerstörungsfreien Prüfung von Gegenständen mit Ultraschallwellen zu entwickeln, mit denen bei einer vorgegebenen Abtastrate für die von einem Ultraschallempfänger erzeugten Signale das Amplitudenmaximum und/oder die Laufzeit des Amplitudenmaximums mit größerer Auflösung bestimmt werden kann.

Das Problem wird für das Verfahren erfindungsgemäß dadurch gelöst, daß aus den Signalen des Signalzuges durch zeitlich äquidistante Abtastung Meßwerte erzeugt werden, die digitalisiert und danach gespeichert werden, daß durch die diskreten gespeicherten, digitalisierten Meßwerte eine Funktion gebildet wird, die durch ein Polynom vom Grade N nach folgender Beziehung ersetzt wird:

$$P_N(t_i) = \sum_{n=0}^{N} a_n \cdot t_i^{\,n}, t_i = i\Delta t$$

worin mit $t_i$ die Abtastzeiten, für i = 0,1, .... N und mit $a_n$ die Koeffizienten des Polynoms bezeichnet sind, und daß mit dem Polynom das Amplitudenextremum der empfangenen Ultraschallwellen und/oder die Laufzeit der Ultraschallwellen mit dem Amplitudenextremum bestimmt wird. Mit Hilfe des Interpolationsverfahrens läßt sich auch dann eine hohe Auflösung bei der Amplituden- und Laufzeitbestimmung erreichen, wenn für den Digitalisierer und für die Speicher handelsübliche Bausteine verwendet werden. Darüber hinaus wird der Hardwareaufwand im Vergleich zu typischen, analog arbeitenden Ultraschallprüfsystemen reduziert. Die Amplituden- und die Laufzeitmessungen können weiterhin mit der gleichen Hardware durchgeführt werden. Das Amplitudenextremum wird bei der Weiterverarbeitung insbesondere mit wenigstens einem vorgegebenen Schwellenwert verglichen, der für einen Fehler charakteristisch ist.

Durch die Interpolation mit dem Polynom kann das Ergebnis mit relativ wenig Rechenaufwand erhalten werden.

Es ist zweckmäßig, wenn die Laufzeit der Ultraschallwelle mit dem Amplitudenextremum aus der ersten Ableitung des Polynoms vom Grade n nach der Zeit nach folgender Beziehung:

$$\frac{\partial P_N}{\partial t} = \sum_{n=0}^{N} n\, a_n\, t^{(n-1)} = 0$$

bestimmt wird und daß das Amplitudenextremum durch Einsetzen des Laufzeitwertes $t = t_0$ in die Gleichung

$$P_N(t_0) = \sum_{n=0}^{N} a_n \cdot t_0^{\,n}$$

des Polynoms bestimmt wird.

Vorzugsweise werden die vom Ultraschallprüfkopf ausgegebenen Signale mit einer Abtastrate zwischen 60 und 120 MHz abgetastet und mit einer Auflösung von acht bis zwölf Bit digitalisiert. Derartige Abtastraten lassen sich mit handelsüblichen Abtast- und Halteschaltungen erzielen. Für Auflösungen bis 8-12 bit können handelsübliche Analog-Digital-Umsetzer verwendet werden.

Bei einer günstigen Ausführungsform werden die Abtastwerte gefiltert, um Fehlereinflüsse zu reduzieren.

Eine Vorrichtung zur zerstörungsfreien Prüfung von Gegenständen mit Ultraschall, von der einerseits mit einem Ultraschallprüfkopf Ultraschallimpulse in den jeweiligen Gegenstand eingeleitet und andererseits aus dem Gegenstand austretende Ultraschallwellen mit einem Ultraschallprüfkopf erfaßt und in elektrische Signale umgewandelt werden, wobei die Vorrichtung einen Verstärker, einen Analog-Digital-Umsetzer, einen Schreib-, Lesespeicher, einen digitalen Prozessor und einen Bus aufweist, besteht erfindungsgemäß darin, daß dem Analog-Digital-Umsetzer eine Abtast- und Halteschaltung vorgeschaltet ist, die mit einer Abtastrate im Bereich von 60 bis 160 MHz aus den elektrischen Signalen Meßwerte erzeugt, die von dem Analog-Digital-Umsetzer mit einer Auflösung von zwölf Bit digitalisiert und danach im Schreib-, Lesespeicher gespeichert werden und daß durch die diskreten, gespeicherten, digitalisierten Meßwerte eine Funktion gebildet wird, die durch ein Polynom vom Grade n nach folgender Beziehung ersetzt wird:

$$P_N(t_i) = \sum_{n=0}^{N} a_n \cdot t_i^{\,n}, t_i = i\,\Delta t$$

worin mit $t_i$ die Abtastzeiten für $i = 0,1, \ldots N$ und mit $a_n$ die Koeffizienten des Polynoms bezeichnet sind, und daß mit dem Polynom das Amplitudenextremum der empfangenen Ultraschallwellen und/oder die Laufzeit der Ultraschallwellen mit dem Amplituden-extremum bestimmt wird. Diese Anordnung arbeitet mit einer handelsüblichen Abtast- und Halteschaltung sowie einem handelsüblichen Analog-Digital-Umsetzer. Die höhere Auflösung der Amplitude und der Laufzeit läßt sich somit auf wirtschäftliche Weise erreichen.

Vorzugsweise sind wenigstens zwei Vorrichtungen mit je einem Ultraschallprüfkopf zum Senden und Empfangen, einem Verstärker, je einer Abtast- und Halteschaltung, je einem Schreib-, Lesespeicher und einem Prozessor zu einer Baueinheit vereinigt. Da der hardwaremäßige Aufwand für die Auswertung der von einem Ultraschallempfänger erzeugten Signale relativ gering ist, können eine Reihe derartiger Anordnungen parallel zueinander vorgesehen sein, um die Prüfgeschwindigkeit zu erhöhen.

Da der komplette Signalverlauf in digitaler Form vorliegt, können auch alle Vorteile der digitalen Signalverarbeitung wie beispielsweise die digitale Filterung oder die Korrelation, zur Verbesserung der Genauigkeit eingesetzt werden.

Weitere Einzelheiten, Merkmale und Vorteile der Erfindung ergeben sich nicht nur aus den Ansprüchen und den diesen zu entnehmenden Merkmalen - für sich und/oder in Kombination -, sondern auch aus der nachfolgenden Beschreibung eines bevorzugten Ausführungsbeispiels.

Es zeigen:

Fig. 1      eine Vorrichtung zur zerstörungsfreien Prüfung von Gegenständen mit digitaler Verarbeitung empfangener Ultraschallsignale im Blockschaltbild,

Fig. 2      ein Blockschaltbild einer herkömmlichen, analog arbeitenden Vorrichtung zur zerstörungsfreien Prüfung von Gegenständen.

Fig. 3     ein Diagramm der theoretisch möglichen Amplitudenauflösung in Abhängigkeit von der Samplingrate und der Digitalisierung eines Analog-Digital-Umsetzers,

Fig. 4     ein als Rißfehlerecho erhaltenes, digitalisiertes Amplitudensignal eines Ultraschallempfängers in Abhängigkeit von der Zeit,

Fig. 5     ein als Wanddickenechofolge erhaltenes, digitalisiertes Amplitudensignal eines Ultraschallempfängers in Abhängigkeit von der Zeit,

Fig. 6     ein als Rißfehlerecho erhaltenes, digitalisiertes Amplitudensignal und eine Interpolationskurve für das Amplitudensignal in Abhängigkeit von der Zeit,

Fig. 7     ein als Wanddickenechofolge erhaltenes, digitalisiertes Amplitudensignal und eine Interpolationskurve für das Amplitudensignal in Abhängigkeit von der Zeit,

Fig. 8     die Amplitudenauflösung eines bestimmten Interpolationsverfahrens in Abhängigkeit von der Abtastrate und der Auflösung des Analog-Digital-Umsetzers und

Fig. 9     die Laufzeitauflösung eines bestimmten Interpolationsverfahrens in Abhängigkeit von der Abtastrate und der Auflösung des Analog-Digital-Umsetzers.

Eine Vorrichtung zur zerstörungsfreien Prüfung von Gegenständen mit Ultraschall enthält einen Ultraschallprüfkopf (10) zum Senden von impulsförmigen Ultraschallwellen und einen Ultraschallprüfkopf (12) zum Empfangen von Ultraschallwellen. Häufig sind Sender und Empfänger für Ultraschallwellen in einem Prüfkopf vereinigt. Der elektroakustische Ultraschallprüfkopf (10) ist über einen Umschalter (14) an einen Sender (16) anschaltbar, der Impulse oder Impulsgruppen erzeugt. Über den Umschalter (14) ist der Sender (16) auch an den Ultraschallprüfkopf (12) anschaltbar. An den Ultraschallprüfkopf (12) ist ein Verstärker (18) angeschlossen, mit dem eine Abtast- und Halteschaltung (20) verbunden ist. Mit einem Datenbus (22) sind die Abtast- und Halteschaltungen (20), ein Analog-Digital-Umsetzer (24), ein Lese-, Schreibspeicher (26) und ein Prozessor (28) verbunden.

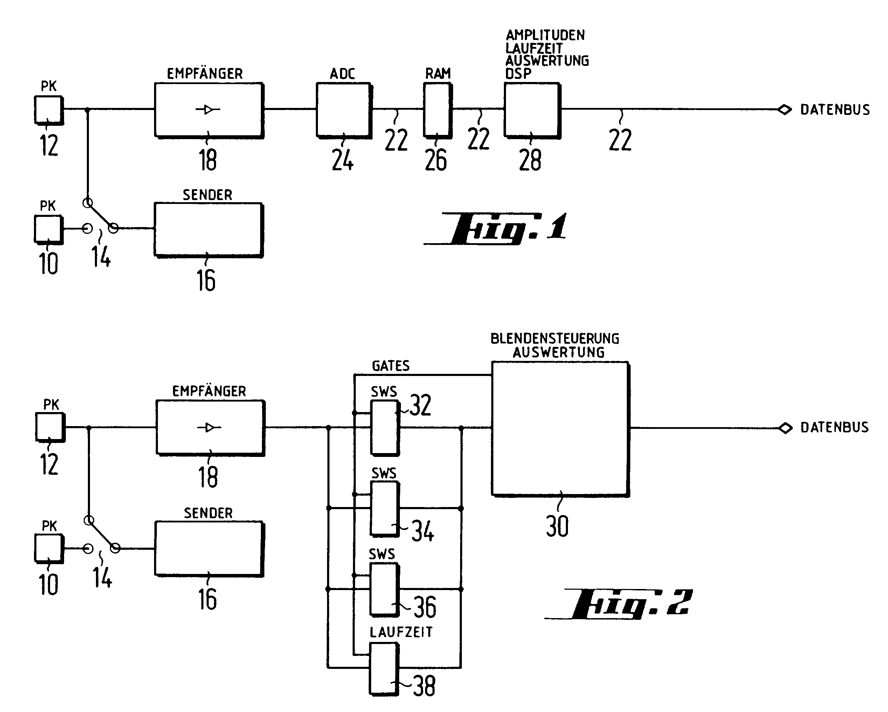

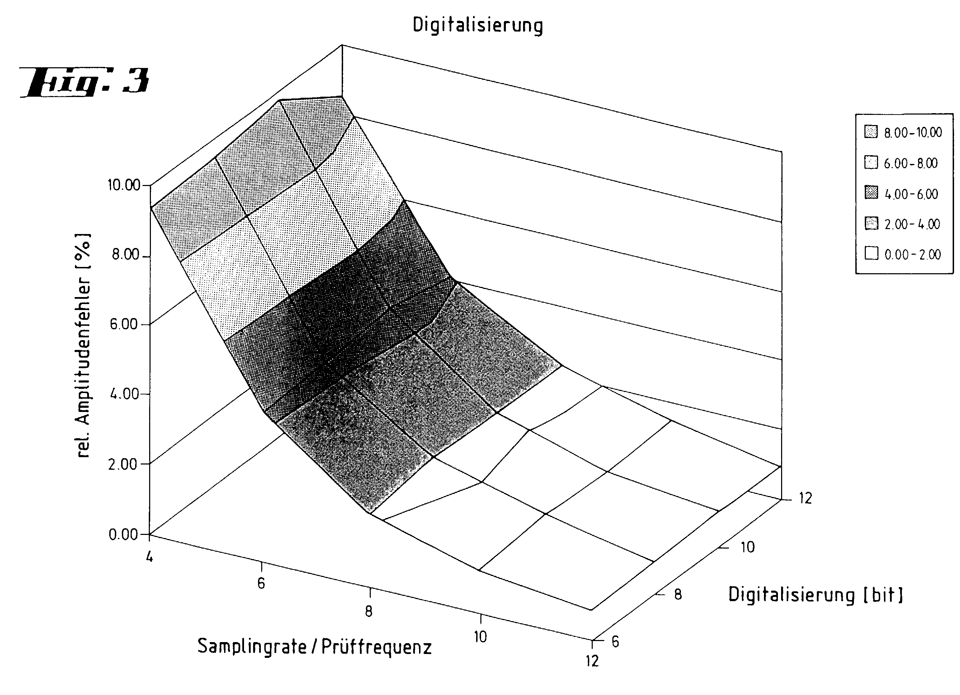

In Fig. 2 ist eine analog arbeitende Vorrichtung zur zerstörungsfreien Prüfung von Gegenständen dargestellt. Die Vorrichtung gemäß Fig. 2 enthält wie die in Fig. 1 dargestellte Vorrichtung den Sender (16), den Umschalter (14), die beiden Ultraschallprüfköpfe (10), (12) in Form von elektroakustischen Wandlern und den Verstärker (18). Mit einer Blendensteuerungs- und Auswerteinheit (30) sind zur Auswertung der vom Ultraschallprüfkopf (12) empfangenen Signale nach der Verstärkung einzelne Zeitbereiche (Blenden) auswählbar. Für jede Blende ist zur Amplitudenbestimmung ein Spitzenwertspeicher erforderlich. In Fig. 2 sind drei Spitzenwertspeicher (32), (34) und (36) dargestellt. Mit dem jeweiligen Spitzenwertspeicher wird das Signalmaximum innerhalb der Blende analog erfaßt. Das so gewonnene Signal kann dann in einem Rechner digitalisiert und weiterverarbeitet werden. Zur Laufzeitmessung ist zusätzlich ein Modul (38) erforderlich. Mit der Signalspitze bzw. Flanke bei Schwellwertüberschreitung innerhalb einer Blende wird ein digitaler Zähler gestartet, der mit dem Ereignis innerhalb einer zweiten Blende gestoppt wird. Zur Erzielung der erforderlichen Genauigkeit sind hochfrequente und damit aufwendige Zähler notwendig. Zur Verbesserung der Auflösung wird oft eine zusätzliche analoge Zeitmessung über ein Sägezahnsignal integriert. Der beim Stoppereignis erreichte Amplitudenwert des Sägezahns wird ebenfalls digitalisiert und über eine Kalibrierung in eine Laufzeit umgerechnet.

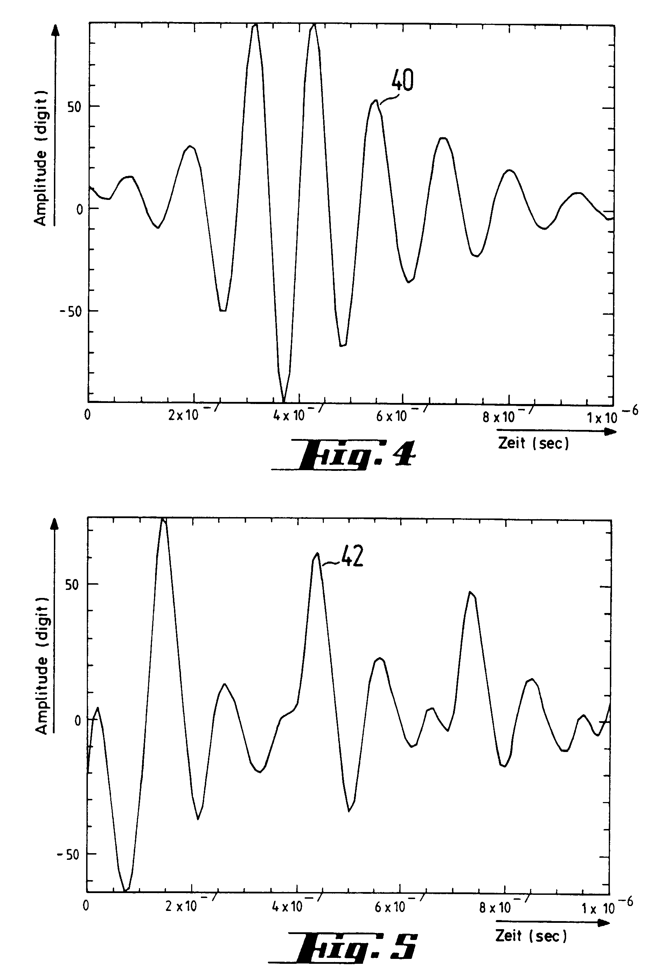

Mit dem in Fig. 1 dargestellten Ultraschallprüfgerät wird der vom Ultraschallprüfkopf (12) empfangene Signalzug nach der Verstärkung abgetastet, digitalisiert und gespeichert. Amplitudenmaximum und Laufzeit der Ultraschallimpulse bis zum Empfang des Amplitudenmaximums werden aus den gespeicherten Daten bestimmt. Die Fig. 3 zeigt ein dreidimensionales Diagramm, in dem der Amplitudenfehler in % in Abhängigkeit von der Abtastrate in MHz und der Digitalisierungsauflösung in Bit dargestellt ist.

Die Fig. 3 zeigt, daß die erzielbare Genauigkeit bei der Amplitudenbestimmung der maximalen Impulsspitze neben der Digitalisierungsauflösung überwiegend durch die Samplingfrequenz der Abtast- und Halteschaltung bzw. des Analog-Digital-Umsetzers bestimmt wird. Die Genauigkeit der zeitlichen Position des Impulsmaximums, deren genaue Kenntnis zur Bestimmung von Laufzeiten erforderlich ist, wird allein durch die Abtastrate bestimmt. Je kleiner das Verhältnis von Samplingfrequenz zu Signalfrequenz ist, desto schlechter ist die Auflösung der Amplituden und Laufzeiten.

Bei der in Fig. 1 dargestellten Anordnung werden handelsübliche Bauelemente, z.B. eine handelsübliche Abtast- und Halteschaltung (20), ein handelsüblicher Analog-Digital-Umsetzer (24) und ein handelsüblicher, als RAM ausgebildeter Schreib-, Lesespeicher (26) verwendet. Der Analog-Digital-Umsetzer (24) hat eine Auflösung von 8-12 bit. Die Abtastrate (Samplingfrequenz) der Abtast- und Halteschaltung und des Analog-Digital-Umsetzers liegt im Bereich von 60 bis 160 MHz.

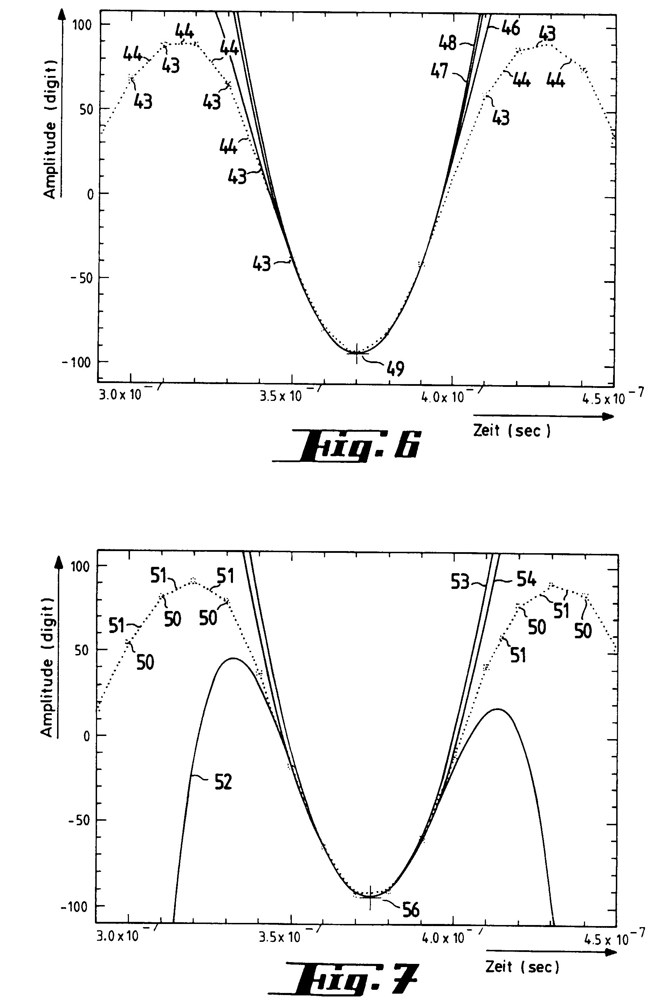

Die Fig. 4 zeigt ein typisches von einem Rißfehler erzeugtes Echosignal (40) mit seinen Abtastwerten, die in Fig. 4 durch Geraden verbunden sind, in Abhängigkeit von der Zeit t. Für eine typische Wandechofolge (42) zeigt Fig. 5 die Abtastwerte, die durch Geraden miteinander verbunden sind, in Abhängigkeit von der Zeit t. Die in Fig. 4 und 5 dargestellten äquidistanten Abtastzeiten sind mit den handelsüblichen Abtastraten erzielt. Es ist ersichtlich, daß die Abtastdichte gemäß Fig. 4 und 5 zur genauen Bestimmung der maximalen Signalamplitude und des Zeitpunkts des Auftretens der maximalen Signalamplitude nicht ausreicht.

Um mit den verfügbaren handelsüblichen Bausteinen für die Erzeugung der Abtastrate und der Digitalisierung eine höhere Auflösung sowohl bezüglich der maximalen Signalamplitude als auch bezüglich des zeitlichen Auftretens der Signalamplitude zu erreichen, wird die durch die digitalen Abtastwerte gegebene gespeicherte Funktion interpoliert.

Die Interpolation beruht auf der Erkenntnis, daß das elektrische Meßsignal mit der Zeitfunktion f(t) an den Anschlüssen eines Ultraschallprüfkopfes, z.B. des Ultraschallprüfkopfes (12), folgende Eigenschaften hat:

$$|f(t)| < \varepsilon_t, \ für \ t < T_s \ und \ t > T_e \tag{1}$$

mit $\varepsilon_t$ als beliebig kleiner $\varepsilon$-Schranke und $T_s$ und $T_e$ als Start- und Endzeitpunkt des Ultraschallsignalzuges.

In den Frequenzbereich transformiert gilt:

$$|F(\omega)| < \varepsilon_\omega, für \ \omega < \omega_s \ und \ \omega > \omega_e \tag{2}$$

mit $\varepsilon_\omega$ als beliebig kleiner $\varepsilon$-Schranke und $\omega_s$ und $\omega_e$ als untere und obere Grenzfrequenz.

Dabei ist F($\omega$) die Fourier-Transformation nach folgender Beziehung:

$$F(\omega) = \int_{-\infty}^{\infty} F(t)e^{\omega t} \cdot dt \tag{3}$$

Es handelt sich dabei um zeit- und bandbegrenzte Signale.

Die Ultraschallprüfköpfe sind im allgemeinen schwingfähige, resonante Strukturen, deren Ausgangsspannungen mit amplitudenmodulierten Sinusschwingungen näherungsweise beschrieben werden können und somit die in den Gln.(1-3) angegebenen Eigenschaften besitzen.

Die Zeitfunktion $f$(t) liegt bei der in Fig. 1 dargestellten Vorrichtung in Form von zeitlich äquidistanten, diskreten Abtastwerten vor, d.h. es gilt:

$$f(i\Delta t), \ für \ i = 0,1,...M \tag{4}$$

Die Abtastintervalle sind hinreichend klein, so daß gilt:

$$\frac{2\pi}{\Delta t} << \omega_e \tag{5}$$

Bei Erfüllung der in (5) angegebenen Bedingung lassen sich die Funktionswerte zwischen den Abtastzeitpunkten n$\Delta$t und (n+1)$\Delta$t durch Interpolation ermitteln. Nach der Bestimmung der Parameter der Interpolation werden die Extremwerte der Amplituden und die Laufzeiten bis zum Auftreten der Extremwerte analytisch angegeben. Als Interpolationsfunktion wird ein Polynom vom Grade N gewählt.

Es sind auch andere funktionale Ansätze möglich, allerdings führen diese in der Regel zu einem nichtlinearen System von Funktionsgleichungen, das sich nur iterativ - und damit rechenintensiv - lösen läßt. Mit dem Polynom:

$$P_N(t_i) = \sum_{n=0}^{N} a_n t_i^{\,n}, \quad t_i = i\Delta t \qquad (6)$$

bildet man die Summe des mittleren Fehlerquadrats:

$$F_Q = \sum_{i=0}^{M} (f(t_i) - P_N(t_i))^2 = \sum_{i=o}^{M} \left\{ f^2(t_i) - 2\sum_{n=0}^{N} a_n t_i^{\,n} f(t_i) + \sum_{n=0}^{N} a_n t_i^{\,n} \sum_{k=0}^{N} a_k t_i^{\,k} \right\} \qquad (7)$$

Aus der Forderung, daß die Summe der Abweichungsquadrate ein Minimum wird, ergibt sich:

$$\frac{\partial F_Q}{\partial a_n} = \sum_{i=0}^{M} \left\{ -2t_i^{\,n} f(t_i) + 2\sum_{k=0}^{N} a_k t_i^{\,k+n} \right\} = 0 \; ; \; n = 0,1,2...N \qquad (8)$$

Mit den Abkürzungen

$$b_{kn} = \sum_{i=0}^{M} t_i^{\,k+n} \quad und \quad c_n = \sum_{i=0}^{M} f(t_i) t_i^{\,n} \qquad (9)$$

kann die Lösung des Gleichungssystems in Gl(8) angegeben werden:

$$a_k = b_{kn}^{-1} c_n \; ; \; n = 0,1,2...N \qquad (10)$$

mit $b^{-1}_{kn}$ sind die Elemente der zur den Matrixelementen $b_{kn}$ gehörenden inversen Matrix zu verstehen.

Wird N = M gewählt, dann ergibt sich eine strenge Interpolation, d.h. $F_Q$ = O. Aus M > N ergibt sich eine Ausgleichskurve und mit M < N ist die Interpolation überbestimmt.

Das Amplitudenmaximum wird wie folgt bestimmt:

Zunächst wird der Zeitpunkt des Amplitudenextremum aus folgender Gleichung berechnet:

$$\frac{\partial P_N}{\partial t} = \sum_{n=0}^{N} n a_n t^{n-1} = 0 \qquad (11)$$

Für N = 2 erhält man mit den Koeffizienten $a_1$ und $a_2$:

$$t_0 = \frac{-a_1}{2a_2} \qquad (12)$$

Für N = 3 folgt mit den Koeffizienten $a_1$, $a_2$ und $a_3$:

$$t_{1,2} = \frac{-a_2 \pm \sqrt{4a_2^2 - 3a_1 a_3}}{3a_3} \qquad (13)$$

Für N = 4 ergeben sich mit der Cardanischen Lösungsformel drei Lösungen. Wählt man N > 4, so kann im allgemeinen die Lösung nur iterativ bestimmt werden (z.B. Verfahren von Björk - Anderson).

Das Amplitudenmaximum wird durch Einsetzen des entsprechenden Zeitwerts in den oben unter (6) angegebenen Polynomansatz bestimmt. Eine Schwellwertbestimmung wird analog ausgeführt.

Eine zusätzliche Schwierigkeit bei der Bestimmung der Amplituden und Laufzeiten entsteht, wenn die gemessenen Funktionswerte $f_M(t_i)$ mit einer statistischen Unsicherheit behaftet sind:

$$f_M(t_i) = \dot{f}(t_i) + r(t_i) \qquad (14)$$

In $r(t_i)$ sind alle Fehlerquellen zusammengefaßt:

- Diskretisierungsrauschen (AD-Wandler)
- "Ultraschallgras" (Gefügerauschen)
- Elektronisches Rauschen (Signalverarbeitungselektronik)
- Störsignale (Übersprechen der Umgebungselektronik)

Zur Reduktion dieser Fehlereinflüsse wird die Funktion $f_M(t_i)$ einer Filterung unterzogen. Im Frequenzbereich erhält man:

$$F_{fil}(\omega) = F_M(\omega) \qquad (15)$$

und im Zeitbereich mit der Bestimmung der Ausgangssignale über das Faltungsintegral:

$$f_{fil}(t) = f_m(t) * h(t), \quad bzw. \quad f_{fil}(t) = \int_{-\infty}^{+\infty} f_m(\tau) h(t - \tau) d\tau \qquad (16)$$

Wenn man nur innerhalb eines kurzen Zeitabschnitts filtern muß, kann das Faltungsintegral näherungsweise auf ein sehr begrenztes Intergations- und Berechnungsintervall reduzieren. Dies ist numerisch einfacher und schneller als die Berechnung der Gln.(15-16).

Für die Filterfunktion kommt im einfachsten Fall ein idealer Tiefpass mit folgender Übertragungsfunktion in Frage:

$$H(\omega) = \begin{cases} 1 & für \ |\omega| \le \omega_{TP} \\ 0 & sonst \end{cases} \qquad (17)$$

Eine wesentlich bessere Möglichkeit stellt ein Matched - Filter (oder auch Korrelationsfilter) dar:

$$h(t - \tau) = f_{Muster}(\tau - t - t_0) \qquad (18)$$

Als $f_{Muster}$ wird z.B. der erste A-Scan einer Meßreihe verwendet. Mit $t_0$ wird der Zeitpunkt des Signalmaximums bezeichnet, damit das Faltungsergebnis nicht zeitverschoben erscheint.

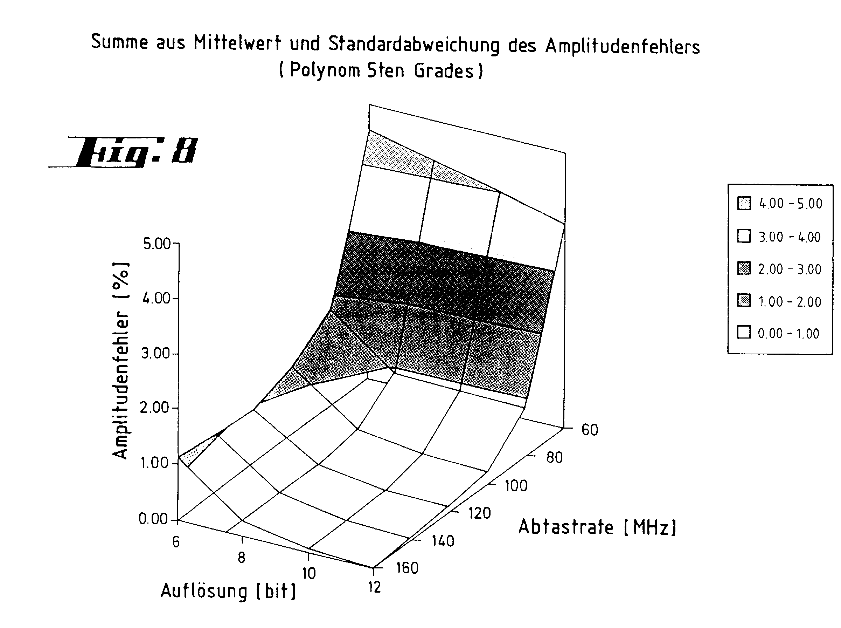

In Fig. 6 sind für ein typisches Rißfehlerecho digitalisierte Meßwerte in einem Diagramm durch Kreuze (43) markiert und durch Geraden (44) miteinander verbunden. Hieraus ist der Verlauf des Rißfehlerechosignals in Abhängigkeit von der Zeit t ersichtlich, die in Abszissenrichtung dargestellt ist. Weiterhin sind in Fig. 6 Interpolationskurven (46), (47) und (48) als Funktion der Zeit t dargestellt. Die Interpolationskurven (46) bis (48) wurden nach dem oben beschriebenen Polynomansatz bestimmt.

Weiterhin ist in Fig. 6 das Amplitudenextremum (49) der Interpolationskurven (46) bis (48) dargestellt. Mit dem aus den Interpolationskurven bestimmten Amplitudenextremum läßt sich, wie aus Fig. 6 ersichtlich ist, eine hohe Auflösung erreichen.

Die Fig. 7 zeigt für eine typische Wanddickenechofolge digitalisierte Meßwerte, die im Diagramm durch Kreuze (50) markiert sind, die jeweils durch Geraden (51) miteinander verbunden sind.

Hieraus ist der Verlauf der Wanddickenechofolge in Abhängigkeit von der Zeit t ersichtlich, die in Abszissenrichtung dargestellt ist.

Weiterhin sind in Fig. 7 Interpolationskurven (52), (53), (54) in Abhängigkeit von der Zeit t dargestellt. Die Interpolationskurven (52) bis (54) wurden nach dem oben beschriebenen Interpolationsansatz mit den in Fig. 7 eingetragenen digitalisierten Meßwerten bestimmt. Das Amplitudenextremum (56), das sich anhand der Interpolationskurven (52) bis (54) ergibt, ist in Fig. 7 ebenfalls eingetragen. Die Fig. 7 zeigt, daß mittels der Interpolationskurven das Amplitudenextremum mit höherer Auflösung bestimmt werden kann als mit den digitalisierten Abtastwerten alleine.

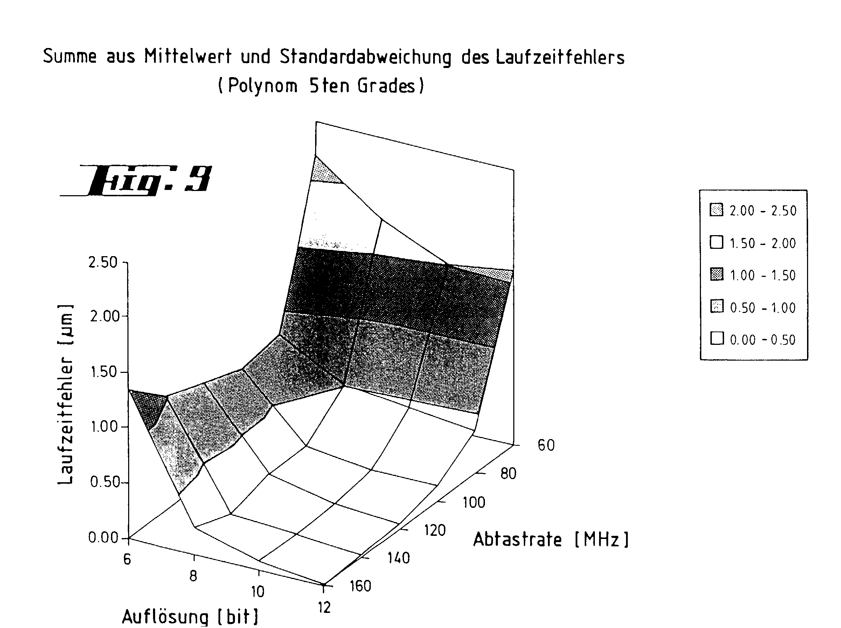

Die theoretisch mögliche Auflösung mittels Interpolation für die Signalamplitude ist in Fig. 8 in dreidimensionalen Diagramm in % als Funktion der Abtastrate (Samplingfrequenz) in MHz und der Auflösung des Analog-Digital-Umsetzers (24) in Bit dargestellt.

In Fig. 9 ist die theoretisch mittels Interpolation mögliche Auflösung für die Laufzeit der Ultraschallsignale in Stahl in μm als Funktion der Abtastrate (Samplingfrequenz) in MHz und der Auflösung des Analog-Digital-Umsetzers (24) in Bit dargestellt.

Mehrere in Fig. 1 dargestellte Vorrichtungen sind zweckmäßigerweise zu einer Baueinheit vereinigt, mit der Gegenstände in mehreren Spuren zerstörungsfrei geprüft werden. Damit läßt sich die Prüfgeschwindigkeit erhöhen.

**Patentansprüche**

1. Verfahren zur zerstörungsfreien Prüfung von Gegenständen mit Ultraschall, wobei mit einem Ultraschallprüfkopf Ultraschallimpulse in den jeweiligen Gegenstand eingeleitet werden und wobei aus dem Gegenstand aufgrund der jeweils eingeleiteten Ultraschallimpulse Ultraschallwellen austreten, die mit einem Ultraschallprüfkopf erfaßt und in elektrische Signale eines Signalzuges umgewandelt werden,
   **dadurch gekennzeichnet,**
   daß aus den Signalen des Signalzuges durch zeitlich äquidistante Abtastung Meßwerte erzeugt werden, die digitalisiert und danach gespeichert werden, daß durch die diskreten, gespeicherten, digitalisierten Meßwerte eine Funktion gebildet wird, die durch ein Polynom vom Grade N nach folgender Beziehung ersetzt wird:

$$P_N(t_i) = \sum_{n=0}^{N} a_n \cdot t_i^{n}, t_i = i\Delta t$$

worin mit $t_i$ die Abtastzeiten für i = 0,1, ... N und mit $a_n$ die Koeffizienten des Polynoms bezeichnet sind, und daß mit dem Polynom das Amplitudenextremum der empfangenen Ultraschallwellen und/oder die Laufzeit der Ultraschallwellen mit dem Amplitudenextremum bestimmt wird.

2. Verfahren nach Anspruch 1,
   **dadurch gekennzeichnet,**
   daß der Laufzeitwert der Ultraschallwelle mit dem Amplitudenextremum aus der ersten Ableitung des Polynoms vom Grade n nach der Zeit nach folgender Beziehung:

$$\frac{\partial P_N}{\partial t} = \sum_{n=0}^{N} n a_n t^{(n-1)} = 0$$

bestimmt wird und daß das Amplitudenextremum durch Einsetzen des Laufzeitwerts in die Gleichung:

$$P_N(t_i) = \sum_{n=0}^{N} a_n \cdot t_i^{n}$$

des Polynoms bestimmt wird.

3. Verfahren nach Ansprüche 1 oder 2,
   **dadurch gekennzeichnet,**
   daß die vom Ultraschallprüfkopf ausgehenden Signale mit einer Abtastrate zwischen 60 und 160 MHz abgetastet und mit einer Auflösung zwischen acht von zwölf Bit digitalisiert werden.

4. Verfahren nach einem oder mehreren der vorhergehenden Ansprüche,
   **dadurch gekennzeichnet,**
   daß die Abtastwerte gefiltert werden.

5. Verfahren nach Anspruch 4,
   **dadurch gekennzeichnet,**
   daß die Filterung eine Tiefpaßcharakteristik hat.

6. Verfahren nach Anspruch 4,
   **dadurch gekennzeichnet,**
   daß die Filterung eine Matched-Filtercharakteristik hat.

7. Vorrichtung zur zerstörungsfreien Prüfung von Gegenständen mit Ultraschall, wobei einerseits mit einem Ultraschallprüfkopf Ultraschallimpulse in den jeweiligen Gegenstand eingeleitet und andererseits aus dem Gegenstand austretende Ultraschallwellen mit einem Ultraschallprüfkopf erfaßt und in elektrische Signale umgewandelt werden und wobei die Vorrichtung einen Verstärker (18), einen Analog-Digital-Umsetzer (24), einen Schreib-Lesespeicher (26), einen digitalen Prozessor (28) und einen Bus (22) aufweist,
   **dadurch gekennzeichnet,**
   daß dem Analog-Digital-Umsetzer (24) eine Abtast- und Halteschaltung (20) vorgeschaltet ist, die mit einer Abtastrate im Bereich von 60 bis 160 MHz aus den elektrischen Signalen Meßwerte erzeugt, die von dem Analog-Digital-Umsetzer (24) mit einer Auflösung von zwölf Bit digitalisiert und danach im Schreib-, Lesespeicher (26) gespeichert werden und daß durch die diskreten, gespeicherten, digitalisierten Meßwerte eine Funktion gebildet wird, die durch ein Polynom vom Grade n nach folgender Beziehung ersetzt wird:

$$P_N(t_i) = \sum_{n=0}^{N} a_n \cdot t_i^{n}, t_i = i\Delta t$$

worin mit $t_i$ die Abtastzeiten für $i = 0,1, \ldots N$ und mit $a_n$ die Koeffizienten des Polynoms bezeichnet sind, und daß mit dem Polynom das Amplitudenextremum der empfangenen Ultraschallwellen und/oder die Laufzeit der Ultraschallwellen mit dem Amplitudenextremum bestimmt wird.

8. Vorrichtung nach Anspruch 7,
   **dadurch gekennzeichnet,**
   daß wenigstens zwei Vorrichtungen mit je einem Ultraschallprüfkopf (10) zum Senden und Empfangen von Ultraschallwellen, mit je einer Abtast- und Halteschaltung (20), mit je einem Schreib-, Lesespeicher (26) und mit einem Prozessor (28) zu einer Baueinheit vereinigt sind.

**Claims**

1. A method for non-destructive testing of objects using ultrasonics, whereby ultrasonic pulses are introduced by an ultrasonic testing head into the respective object, and whereby ultrasonic waves are emitted by the object on account of the ultrasonic pulses introduced and are then picked up by an ultrasonic testing head and converted into electrical signals of a signal sequence,
   **wherein**
   measurement values are obtained from said signals of said signal sequence by time-equidistant sampling and then digitalized and stored, a function is formed by the discrete measurement values stored and digitalized and is replaced by a Grade N polynomial according to the following equation:

$$P_N(t_i) = \sum_{n=0}^{N} a_n \cdot t_i^{\,n}, t_i = i\Delta t$$

where $t_i$ is the sampling times, for i = 0.1 ... N, and $a_n$ the coefficients of the polynomial, and in that the amplitude extreme of the received ultrasonic waves and/or the delay of said ultrasonic waves with the amplitude extreme is determined using said polynomial.

2. A method according to Claim 1,
   **wherein**
   said delay of said ultrasonic waves is determined with the amplitude extreme from the first derivation of said Grade N polynomial based on the time using the following equation:

$$\frac{\partial P_N}{\partial t} = \sum_{n=0}^{N} n\, a_n\, t^{(n-1)} = 0$$

and that said amplitude extreme is determined by incorporation of the delay value into the equation

$$P_N(t_i) = \sum_{n=0}^{N} a_n \cdot t_i^{\,n}$$

of said polynomial.

3. A method according to Claim 1 or Claim 2,
   **wherein**
   the signals emitted by said ultrasonic testing head are preferably sampled with a sampling rate between 60 and 120 MHz and digitalized with a resolution of eight to twelve bits.

4. A method according to one or more of the preceding claims,
   **wherein**
   said sampling rates are filtered.

5. A method according to Claim 4,
   **wherein**
   said filtering has a low-pass characteristic.

6. A method according to Claim 4,
   **wherein**
   said filtering has a matched-filter characteristic.

7. A device for non-destructive testing of objects using ultrasonics, by which on the one hand ultrasonic pulses are introduced by an ultrasonic testing head into the respective object and on the other hand ultrasonic waves being emitted by the object are picked up by an ultrasonic testing head and converted into electrical signals of a signal sequence, where said device has an amplifier (18), an analog/digital converter (24), a write/read memory (26), a digital processor (28) and a bus (22),
   **wherein**
   a sample and hold circuit (20) is connected in front of said analog/digital converter (24) and operates with a sampling rate in the range from 60 to 120 MHz to generate from the electrical signals measurement values that are digitized by said analog/digital converter (24) with a resolution of twelve bits and then stored in said write/read memory (26), and wherein the discrete, stored and digitized measurement values form a function which is replaced by a Grade n polynomial according to the following equation:

$$P_N(t_i) = \sum_{n=0}^{N} a_n \cdot t_i^n; t_i = i\Delta t$$

where $t_i$ is the sampling times for $i = 0.1 \ldots N$, and $a_n$ the coefficients of said polynomial, and wherein the amplitude extreme of the received ultrasonic waves and/or the delay of said ultrasonic waves with the amplitude extreme is determined using said plynomial.

8. A device according to Claim 7,
   **wherein**
   at least two devices each having an ultrasonic testing head (10) for transmission and reception of ultrasonic waves, a sample and hold circuit (20), a write/read memory (26) and a processor (28) are combined into one design unit.

**Revendications**

1. Procédé de contrôle non destructif d'objets avec des ultrasons, selon lequel on induit dans l'objet des impulsions d'ultrasons par une tête de contrôle à ultrasons et des ondes à ultrasons sortent de l'objet résultant des impulsions d'ultrasons chaque fois induites, les ultrasons de sortie étant détectés par une tête de contrôle pour être convertis en signaux électriques appartenant à un train de signaux,
   caractérisé en ce qu'

   - à partir des signaux du train de signaux, par une détection équidistante dans le temps on génère des valeurs de mesure que l'on numérise puis que l'on enregistre,
   - et par les valeurs de mesure discrètes, numérisées, mises en mémoire, on forme une fonction remplacée par un polynôme de degré N correspondant à la relation suivante :

$$P_N(t_i) = \sum_{n=0}^{N} a_n \cdot t_i^n, t_i = i\Delta t$$

   dans laquelle $t_i$ représente les instants de détection pour $i = 0, 1 \ldots N$ et
   $a_n$ représente les coefficients du polynôme, et
   - avec le polynôme on détermine l'extremum de l'amplitude des ondes ultrasonores reçues et/ou du temps de parcours des ondes d'ultrasons avec l'extremum d'amplitude.

2. Procédé selon la revendication 1,
   caractérisé en ce que
   le temps de parcours de l'onde ultrasonore avec l'extremum d'amplitude se déduit de la dérivée première du polynôme de degré (n) en fonction du temps selon la relation suivante :

$$\frac{\partial P_N}{\partial t} = \sum_{n=0}^{N} n a_n t^{(n-1)} = 0$$

   et on définit l'extremum d'amplitude en substituant la valeur du temps de parcours dans l'équation du polynôme :

$$P_N(t_i) = \sum_{n=0}^{N} a_n \cdot t_i^n \ .$$

3. Procédé selon la revendication 1 ou 2,
caractérisé en ce que
les signaux émis par la tête de contrôle à ultrasons sont détectés à une fréquence de détection comprise entre 60 et 160 MHz et sont numérisés suivant une résolution comprise entre 8 et 12 bits.

4. Procédé selon l'une ou plusieurs des revendications précédentes,
caractérisé en ce qu'
on filtre les valeurs de détection.

5. Procédé selon la revendication 4,
caractérisé en ce que
le filtrage présente une caractéristique de filtre passe-bas.

6. Procédé selon la revendication 4,
caractérisé en ce que
le filtrage présente une caractéristique de filtre adapté.

7. Dispositif de contrôle non destructif d'objets avec des ultrasons, selon lequel, d'une part, on induit des impulsions d'ultrasons dans la tête de contrôle à ultrason, et, d'autre part, on saisit les ondes d'ultrasons sortant de l'objet avec une tête de contrôle et on les convertit en des signaux électriques, et le dispositif comprend un amplificateur (18), un convertisseur analogique/numérique (24), une mémoire enregistrement/lecture (26), un processeur numérique (28) et un bus (22),
caractérisé par

- un circuit de détection et de maintien (20), en amont du convertisseur analogique/numérique (24), ce circuit générant des valeurs de mesure à partir des signaux électriques suivant une fréquence de détection de l'ordre de 60 à 160 MHz, ces valeurs de mesure étant numérisées par le convertisseur analogique/numérique (24) avec une résolution de 12 bits puis ces signaux sont mis en mémoire dans une mémoire d'enregistrement/ lecture (26) et
- par des valeurs de mesure discrètes, numériques, mises en mémoire on forme une fonction remplacée par un polynôme d'ordre (n) correspondant à la relation suivante :

$$P_N(t_i) = \sum_{n=0}^{N} a_n \cdot t_i^n, \, t_i = i\Delta t$$

dans lequel $t_i$ représente les instants de détection pour $i = 0, 1, \ldots N$ etc ... et $a_n$ représente les coefficients du polynôme et
- avec le polynôme on définit l'extremum d'amplitude des ondes ultrasonores reçues et/ou les temps de parcours des ondes ultrasonores avec l'extremum d'amplitude.

8. Dispositif selon la revendication 7,
caractérisé en ce qu'
au moins deux dispositifs ayant chacun une tête de contrôle à ultrasons (10) pour l'émission et la réception d'ondes ultrasonores sont réunis avec chaque fois un circuit de détection et de maintien (20) et avec chaque fois une mémoire enregistrement/lecture (26) et un processeur (28) pour former un ensemble.

Fig. 1

Fig. 2

Fig. 3

_Fig. 4_

_Fig. 5_

16

_Fig. 6_

_Fig. 7_

Summe aus Mittelwert und Standardabweichung des Amplitudenfehlers
( Polynom 5ten Grades )

Fig. 8

EP 0 699 307 B1

18

Summe aus Mittelwert und Standardabweichung des Laufzeitfehlers
(Polynom 5ten Grades)